# EUROPEAN PATENT SPECIFICATION

(11) **EP 4 040 325 B1**
(45) Date of publication and mention of the grant of the patent: **29.10.2025**
(21) Application number: 22155119.5
(22) Date of filing: 04.02.2022
(51) Int. Cl.: G06F 30/12, G06F 3/04815, G06F 3/04842, G06F 111/04, G06F 3/0486

(54) **METHOD FOR SUGGESTING MATES FOR A USER SELECTED MODELED COMPONENT**
VERFAHREN ZUM VORSCHLAGEN VON PARTNERN FÜR EINE VOM BENUTZER AUSGEWÄHLTE MODELLIERTE KOMPONENTE
PROCÉDÉ DE SUGGESTION DE COUPLAGES POUR UN COMPOSANT MODÉLISÉ SÉLECTIONNÉ PAR L'UTILISATEUR

(30) Priority: 05.02.2021 IN 202111005037
(43) Date of publication of application: 10.08.2022
(73) Proprietor: Dassault Systemes SolidWorks Corporation, Waltham, MA 02451-1223 (US)
(72) Inventor: APTE, MAKARAND, Waltham (US); RUEPP, Frank, Waltham (US); LAMA, Chin-Loo, Waltham (US); DOLLEN, Frederick, Waltham (US); STILES, JODY, Waltham (US); MULE, GIRISH, Waltham (US)
(74) Representative: Bandpay & Greuter

(56) References cited:
- US-A1- 2003 076 356
- US-A1- 2014 013 254
- US-A1- 2014 108 982
- US-B1- 6 219 049

## Description

### CROSS-REFERENCE TO RELATED APPLICATION(S)

This application claims the benefit of priority to Indian Patent Application No. 202111005037, entitled Method for Suggesting a Pairing for a User Selected Modeled Component, which was filed on February 5, 2021.

### FIELD OF THE INVENTION

The present invention relates to modeling of physical systems, and more particularly, is related to simplifying repetitive processes in a modeled system.

### BACKGROUND OF THE INVENTION

In computer assisted drafting (CAD) applications, parts are joined together to form assemblies using mates or constraints. Even small assemblies may have tens of parts and more mates. Assembling all the parts in an assembly is a tedious task even for a small assembly and gets increasingly more tedious for larger assemblies with hundreds of possible mates.

In order to create a mate between two specific parts of an assembly, the user manipulates the two parts to visually align corresponding geometrical surfaces for the user to select for mating. Once the parts have been selected, from a list of parts for example, the user chooses the appropriate type of mate, which may involve flipping the orientation or the sense of alignment of one or both parts. The user then must repeat this process with any other desired mates. If the user makes a mistake, for example, by selecting a wrong geometrical surface or an incorrect alignment, the user may have to abandon the attempted mate and start over.

Presently, manually mating components involves the time consuming process of specifying relationships between geometric entities and eliminating degrees of freedom based on the geometry and the relation in the context of a 3D assembly. Experienced CAD users cite manually creating mates as a burdensome task.

For example, when manually creating a mate, usually there is a fixed component in the assembly that cannot be moved. In some implementations, the first component inserted into an assembly is designated as being fixed. A second component inserted into the model does not have any constraints, and may be freely moved and rotated in the assembly. Mating the first and second component involves manually removing existing degrees of freedom (DOF) from the second component, and the user manually rotates and translates the second component in relation to the first component. This may also involve rotations of the view of the entire assembly to facilitate identifying mateable surfaces. The user may then continue to remove additional DOF to identify the mate. This may be a long process, as the user moves and rotates the components, and updates the view of the assembly to determine whether a mate is feasible. Document US2003076356A1 discloses user interface for a CAD system, where mating is done between components by dragging a component near other components, whereby a nearby component is analysed for mating possibility, and in case possible, a suggestion for mating is displayed.

Previous attempts to address this problem involved an approach where a local coordinate system is generated based on the selection of an entity. Here, users can select two geometrical entities and then select the mate type to be applied between the selected entities. The local coordinate systems are then aligned accordingly, eliminating the necessary degrees of freedom. While this facilitates the process of creating relations between components, this is still a process where users must manually select the geometry and then manually set the mate type in order to achieve the intended result. Therefore, there is a need in the industry to resolve one or more of the abovementioned shortcomings.

### SUMMARY OF THE INVENTION

Embodiments of the present invention provide a method for suggesting a pairing for a user selected modeled component. Briefly described, the present invention is directed to a method for mating a user selected first component of a computer aided drafting application assembly to a second component. A user drag of the first component is detected. A user pause of the drag is detected at a pause location for a predetermined interval. A plurality of first component surfaces and a plurality of second component surfaces are identified. The first component surfaces are compared with the second component surfaces, and a mating is suggested between a first component surface and a second component surface. The invention is defined in the appended claims.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.
FIG. 1 is a flowchart of a first exemplary embodiment of a method for automatically identifying a mate between two components in a modeled assembly from the perspective of a user.
FIG. 2 is a flowchart of the first exemplary embodiment of the method of FIG. 1 for automatically identifying the mate in a modeled assembly by a CAD system.
FIG. 3 is a diagram showing an illustrative example of a user selected component model to mate with an assembly model under the first embodiment.
FIG. 4. shows identified faces of the diagram of FIG. 3.
FIG. 5 is a diagram showing the selected component dragged over the assembly model of FIG. 3.
FIG. 6 is a schematic diagram illustrating an example of a system for executing functionality of the present invention.
FIG. 7A illustrates an example of a first step of the flowchart of FIG. 1 from a user perspective via a graphical interface of the CAD system.
FIG. 7B illustrates a subsequent step from FIG. 7A of the flowchart of FIG. 1.
FIG. 7C illustrates a subsequent step from FIG. 7B of the flowchart of FIG. 1.
FIG. 7D illustrates a subsequent step from FIG. 7C of the flowchart of FIG. 1.
FIG. 7E illustrates a subsequent step from FIG. 7D of the flowchart of FIG. 1.
FIG. 7F illustrates a subsequent step from FIG. 7E of the flowchart of FIG. 1.
FIG. 7G illustrates a subsequent step from FIG. 7F of the flowchart of FIG. 1.

### DETAILED DESCRIPTION

The following definitions are useful for interpreting terms applied to features of the embodiments disclosed herein, and are meant only to define elements within the disclosure.

As used within this disclosure, a "component list" refers to a listing of individual parts of a two dimensional (2D) or three dimensional (3D) modeled assembly. In a CAD environment, a component list may be presented visually as a side-bar to a graphical window presenting a 2D or 3D rendering of the modeled assembly. The component list and the graphical window may be interactive, for example, selecting a component in the component list may highlight the corresponding component in the graphical window, and likewise selecting a component in the graphical window (for example, via a mouse click) may highlight the corresponding component in the component list.

As used within this disclosure, a "face" refers to a surface of a part of a 2D or 3D modeled assembly.

As used within this disclosure, a "geometric entity" refers to a face, an edge, a vertex, a plane, or an axis of a component of a modeled assembly, for example, a three dimensional (3D) model.

As used within this disclosure, a "mateable pair" (of geometric entities) refers to any two geometric entities that may be feasibly mated to create a constraint between them. Each mateable pair is therefore associated with the kind of constraint to be made between them. If multiple types of constraints can be made between two components, each different type of constraint is considered to be associated with a distinct mateable pair.

As used within this disclosure, a "constraint" refers to a limitation or removal of at least one degree of freedom of a modeled component. In general, a mating or pairing of two components introduces at least one constraint on one or both of the mated/paired components.

As used within this disclosure, a "one-shot mate" refers to a mate where multiple constraints are introduced simultaneously.

As used within this disclosure, a "solver" refers to a module configured to analyze a selected component of a modeled assembly to find an appropriate mate to form a mateable pair with the selected component based on the geometry of other components of the assembly. The solver module may be implemented, in hardware, software, or a combination of hardware and software.

As used within this disclosure, a "selection" of a modeled component refers to a user indicating a desired component via a user interface interaction, for example, a mouse/trackpad click, a touchpad tap, or a virtual touch in a virtual reality environment, among others.

As used within this disclosure, a "drag" refers to a user initiated movement of a selected modeled component of a CAD assembly. Typically, the drag occurs via a graphical user interface manipulation of the selected modeled component, where the user moves the selected modeled component via, for example a mouse/trackpad movement, a touchpad movement, or a push/pull/nudge in a virtual reality (VR) environment. In general, a drag generally occurs while the user is actively engaged with the object via the user interface, for example, by holding down the mouse/trackpad button while moving the mouse/trackpad ball. For a touch pad, the drag may occur after the initial tap for selection by maintaining finger contact with the selected object. For VR, the drag may occur by a pinch/grasp gesture of the selected object and moving the object while it is still pinched/grasped.

As used within this disclosure, a "release" of a selected or dragged component refers to the user indicating the end of the drag process, for example, by physically releasing the mouse/trackpad button, lifting a finger off of a touch pad, or opening the fingers after a pinch/grasp gesture in VR.

As used within this disclosure, a "pause" of a dragged component refers to at least a temporary cessation of movement of a dragged object without a release of the dragged object. For example, a time interval may be defined to determine whether a drag has been paused.

As used within this disclosure, "presenting" a pairing refers to providing a visual indication of the pairing via a graphical user interface of the CAD system, for example, indicating the pairing by superimposing a highlighted graphical representation of the pairing in the context of the displayed assembly.

Reference will now be made in detail to embodiments of the present invention, examples of which are illustrated in the accompanying drawings. Wherever possible, the same reference numbers are used in the drawings and the description to refer to the same or like parts.

As noted in the Background section, previously mates were formed by manually selecting geometry from a set of assembly components and manually assigning relations between the selected entities (and with it the related components). Under the present embodiments, instead the geometry of a component that is being dragged is analyzed in the context of the assembly and the surrounding components. Based on this analysis the method determines possible mate solutions and proposes those solutions to the user. The user can accept a proposed solution, for example, by releasing the component being dragged.

The embodiments described here reduce the burden of manually specifying mates by the CAD user in next generation "Smart CAD" software. Under the present embodiments, a user brings a set of parts (components) to be assembled together and the software automatically suggests appropriate mates. This is analogous to how two magnets self-align when brought together.

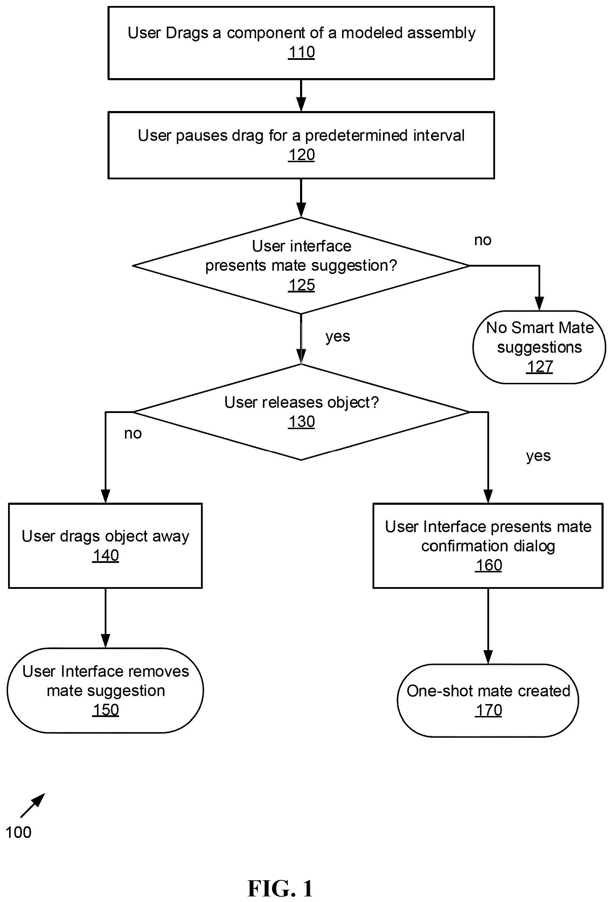

FIG. 1 is a flowchart of a first exemplary embodiment of a method 100 for automatically identifying a mate in a modeled assembly from the viewpoint of a user. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

The first embodiment simplifies the process of mating components of a 3D assembly, where a user of a CAD system merely drags the representation of a component in a modeled assembly the geometry of the dragged component and the geometry surrounding the component are analyzed to offer possible mate solutions to the user. The user drags the component of the modeled assembly, as shown by block 110. As shown by block 120, the user pauses the drag for a predetermined interval, for example, on the order of half a second. If a solver component of the CAD system determines there is not a potential mate for the dragged component in the vicinity of the location where the drag has paused, no smart mate suggestion is presented to the user, as shown by block 127.

If the solver component of the CAD system determines there is a potential mate for the dragged component in the vicinity of the location where the drag has paused, the user interface may present a mate suggestion for the dragged component, as shown by block 125. For example, the CAD system may offer a mate suggestion as a visual depiction of the dragged component mated with another component of the modeled assembly. Upon being presented with the mate suggestion, the user may release the object being dragged as shown by block 130. Upon release of the object being dragged, the CAD system user interface presents a mate confirmation object, such as a dialog box, as shown by block 160, where the user may accept the mate resulting in the creation of a one-shot mate, as shown by block 170. If the user does not want to accept the suggested mate, the user drags the object away from the paused location without releasing, as shown by block 140. The CAD system user interface subsequently removes the mate suggestion, as shown by block 150.

With the method of this embodiment the user does not have to manually remove degrees of freedom in order to specify the position of a component in the context of a 3D assembly, providing greater efficiency and saving time.

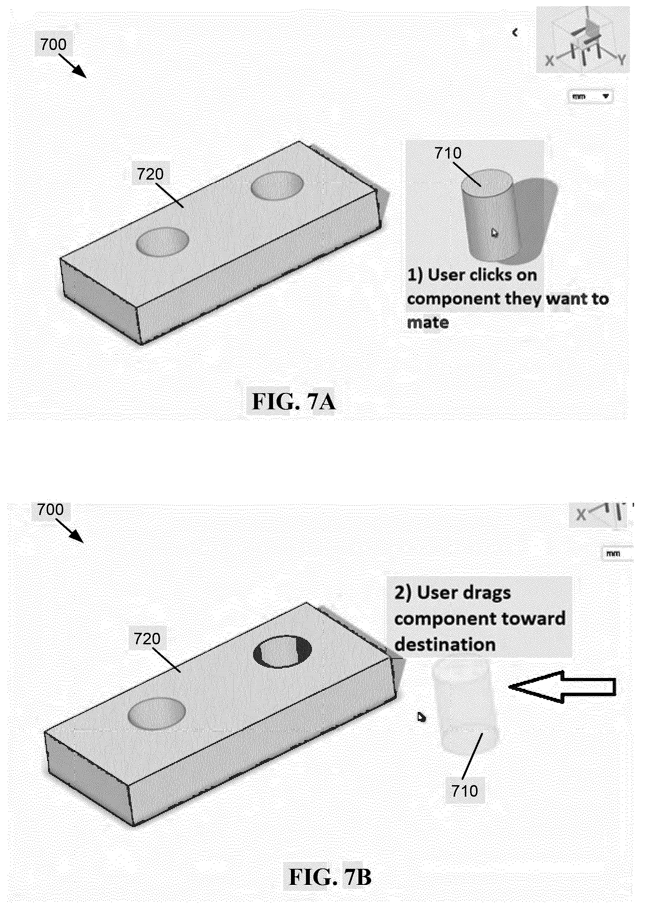

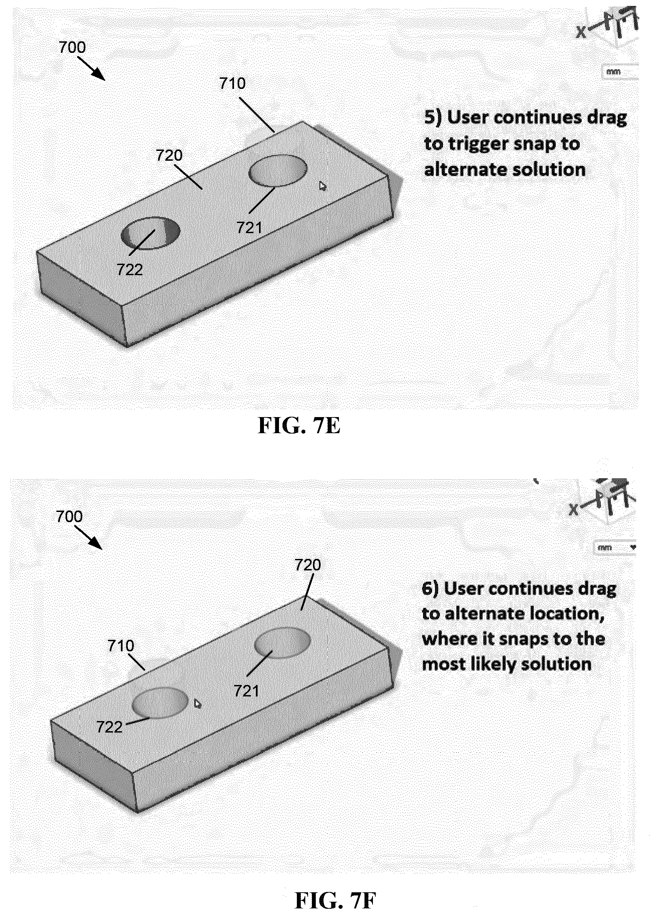

FIGS. 7A-7G illustrate an example of the steps of the flowchart of FIG. 1 from a user perspective via a graphical interface of the CAD system. As shown by FIG. 7A, a CAD system displays an assembly 700 having at least one unconstrained component 710. The user clicks on the 710 component in a graphics area. As shown by FIG. 7B, the user drags the unconstrained component 710 toward a destination 720 where he wants the component mated. As shown by FIG. 7B, the CAD system may indicate the location of the dragged component 710 using a light, greyed, or transparent view, a dashed outline, or another means for indicating a temporary position.

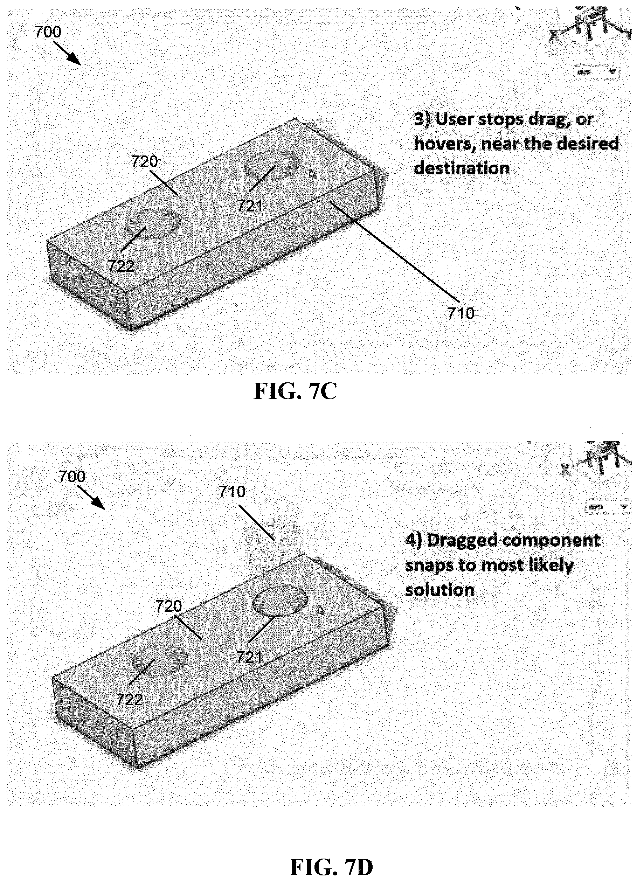

As shown by FIG. 7C, the user briefly pauses the drag of the component 710, for example hovering over a first hole 721 in the destination 720 for on the order of 500-1200ms, triggering the smart mate solver of the CAD system to start an analysis of the dragged component 710 and other components 720 in the assembly 700. The method used by the smart mate is described later.

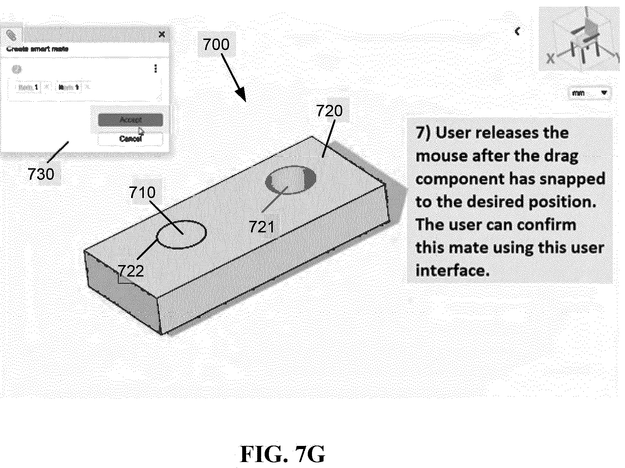

The analysis performed by the smart mate solver determines the most likely positions that the two components 710, 720 would be mated together. The CAD system positions a representation of the component 720 to the most likely solution computed, here, a first hole 721, as shown by FIG. 7D. The CAD system may graphically indicate the suggested mate, for example using a colored shading. As shown by FIGS. 7E-F, assuming the snapped position is not what the user wants, the user continues the drag toward the desired location, here, a second hole 722. The smart solver mate determines that the second hole 722 is a suggested mate, and indicates the suggestion graphically, for example, by "snapping" a depiction of the selected component 710 to a position in the context of the suggested mate. As shown by FIG. 7G, once the drag component is in the desired location (here, the second hole 722), the user releases the mouse to commit the component 710 according to the suggested mated in the displayed snapped location. The user may accept the suggested pairing, for example, via a confirmation user dialog box 730 displayed by the CAD system.

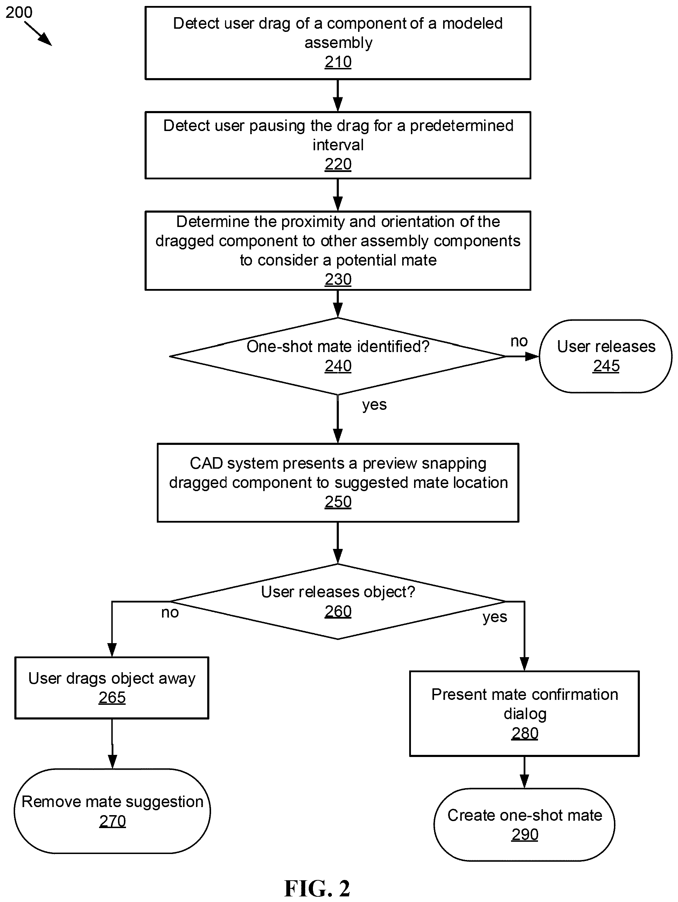

FIG. 2 is a flowchart of the first exemplary embodiment of a method 200 for automatically identifying a mate in a modeled assembly by a CAD system. The CAD system detects a user drag of a component (the "selected component" or the "dragged component") of the modeled assembly, as shown by block 210.

As shown by block 220, the CAD system detects a user pause of the drag for a predetermined interval, for example, on the order of half a second. A solver component ("smart mate solver") of the CAD system looks for potential surfaces of the assembly in proximity of the present paused drag location of the dragged component to determine whether there is a potential mate for the dragged component, as shown by block 230. For example, the CAD system may identify data structures representing the existing constraints for the dragged component, and look for new constraints that do not already apply to the current dragged component.

If the solver component of the CAD system determines there is a potential mate for the dragged component in the vicinity of the location where the drag has paused, as shown by block 240, the user interface may present a mate suggestion for the dragged component, as shown by block 250. For example, the CAD system may offer a mate suggestion as a visual depiction of the dragged component mated with another component of the modeled assembly. Upon being presented with the mate suggestion, the user may release the object being dragged as shown by block 260. Upon release of the object being dragged, the CAD system user interface presents a mate confirmation dialog, as shown by block 280, where the user may accept the suggested mate resulting in the creation of a one-shot mate, as shown by block 290. If the user drags the object away from the paused location, as shown by block 265, the CAD system user interface subsequently removes the mate suggestion, as shown by block 270.

The smart mate solver analyzes the user selected component to determine if the selected component may be considered to be one part of a mateable pair. For example, the smart mate solver may analyze potential mates within a predetermined proximity of the selected component and calculates whether one or more surfaces of each potential mate may feasibly mate with the selected component, as described in further detail below.

Even if a constraint imposed by a pairing is mathematically feasible, the solver may consider a potential pair non-mateable under several scenarios. For example, the smart mate solver may determine that a potential pair is non-mateable if the potential pair may cause any portion of the 3D model of either portion of the potential pair to collide and enter the material of the other. Similarly, the smart mate solver may determine that a potential pair is non-mateable when introducing the constraint would cause too much rotation in the 3D model. A threshold angle, for example, 30 degrees, may be pre-selected or user-specified. Such a threshold angle may reduce the number of possible constraints and help the smart mate solver complete mating calculations faster. Additionally, a user may relate to having such a threshold, as when a person attempts to mate two real world (physical) objects, she would first orient them correctly. Further, a user may not expect the smart mate solver to create a constraint that turns the plug by 90 degrees.

Under some embodiments, the smart mate solver may create limited types of constraints from a pre-determined (or user-specified) set common constraint types. While there are several types of constraints supported by any modern CAD software, only a subset is commonly used. For example, many CAD users may more commonly use the coincident, concentric, and tangential constraints than the other types of constraints. Embodiments employing rarely used constraints may be confusing to the user.

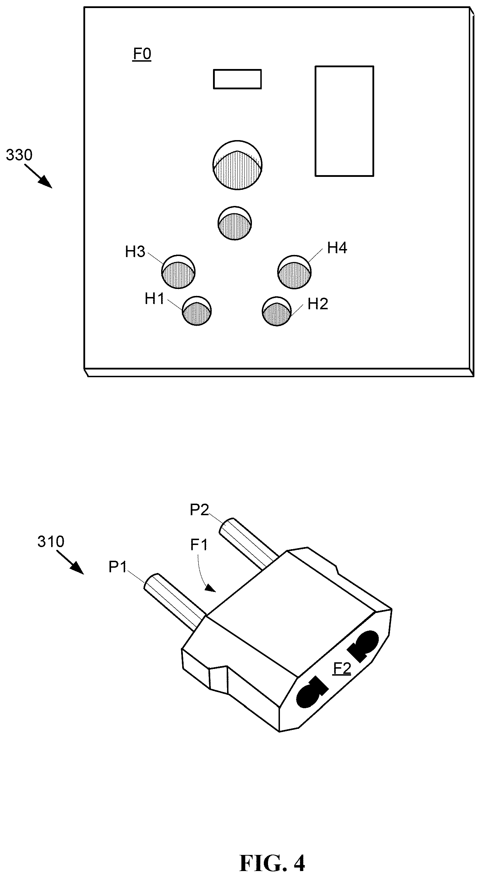

The smart mate solver may consider a mateable pair compatible with another mateable pair when constraints for both mates can be applied simultaneously without any conflicts. As mentioned above, the solver may check for too much rotation and collision detection before considering two pairs compatible. Each pair may individually pass the rotation or collision tests, but when put together they may fail one of the tests, for example if a constraint between the first pair and the second pair allows for a mating of the first pair and the second pair, but not a mating of the first pair and the second pair simultaneously. In FIG. 4, pin P1 may pair with hole H1 and pin P2 may pair with hole H4, but the constraint of the spacing between pin P1 and pin P2 in the plug component model 310 prevents these two pairings simultaneously. Likewise, for a group of compatible pairs that includes an unordered set of mateable pairs in which every member is compatible with every other member of the set, there could be cases where every pair is compatible with every other pair, yet the set as a whole is not compatible. It should be noted that the methods to determine mateability between geometric entities and compatibility of constraints used by the present embodiments are well-known and provided by most modern CAD software.

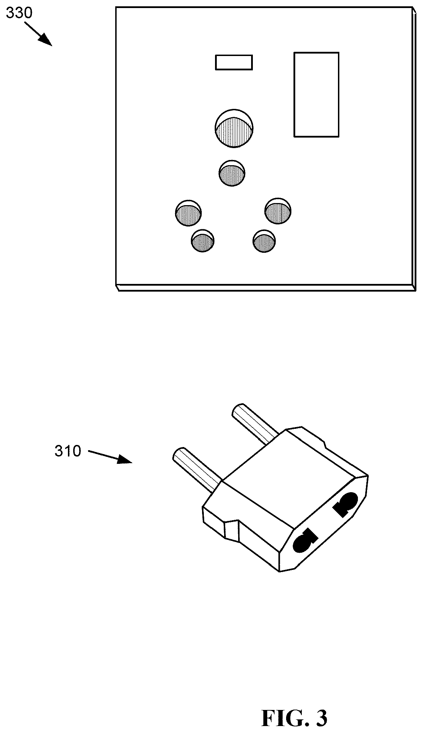

FIG. 3 shows an illustrative example of a plug component model 310 selected by a user that the smart mate solver attempts to mate with a fixed assembly socket component model 330 under the first embodiment.

The smart mate solver examines compatibility between mateable surfaces of the plug component model 310 and the fixed assembly socket component model 330. For this example, only coincident and concentric constraints are allowed, the two most commonly used constraints. As shown by FIG. 4, although there are several faces in the two components 310, 330, for the sake of brevity, only a limited number of faces from each model are discussed, namely faces P1, P2, F1, F2 from the plug component model 310 and faces F0, H1, H2, H3, H4 from the socket component model 330. Here, cylindrical face P1 is mateable with any of the hole faces H1, H2, H3, H4, since a concentric constraint may be defined between them. Similarly, P2 is mateable with any of the holes H1, H2, H3, and H4. P1 is not mateable with P2 since both belong to the same rigid model, they cannot be made concentric. H1 is not mateable with any of H2, H3, and H4. Since each of H1, H2, H3, and H4 belong to the same rigid model, they cannot be made concentric. P1 and F0 are not mateable, because a coincident or concentric constraint cannot be made between P1 and F0, since P1 is a cylindrical face and F0 is a planar face. F0 is mateable with F1 or F2 because they can be made coincident.

The smart mate solver also examines compatibility between mateable pairs. Here, the pair (P1, H3) is a mateable pair and (P2, H4) is a mateable pair, but the two pairs are not compatible with each other because both constraints cannot exist simultaneously, because the distance between the holes H3 and H4 is greater than the distance between the pins P1 and P2. In contrast, the pair (P1, H1) is a mateable pair and (P2, H2) is a mateable pair, and the two pairs are compatible with each other because both constraints can exist simultaneously. The distance between the holes H1 and H2 is the same as the distance between the pins P1 and P2. The three mateable pairs (F1, F0), (P1, H1) and (P2, H2) are compatible with each other because all three constraints can exist simultaneously. The two mateable pairs (F1, F0) and (F2, F0) are incompatible because, although each constraint can be made independently, the two constraints cannot exist at the same time.

The smart mate solver process is initiated when a user drags the plug component model 310 over the assembly socket component model 330. The smart mate solver finds all mateable pairs of geometric entities between the two models 310, 330, and forms groups of compatible pairs. Each group is a potential mating solution that can be suggested to the user. For each group, the smart mate solver computes the amount of rotation and translation needed, and sorts the groups in order based on an assessment of how likely a solution is the one that the user desires, as described below in more detail.

The smart mate solver may assess the likelihood of a solution based primarily on how close the solution is from the current position. Alternatively, prior to dragging, the user may indicate, for example by selecting, a subset of the geometric entities that need to be mated. The smart mate solver may prioritize solutions that include the selected geometric entities over other identified solutions.

The smart mate solver may also leverage historical/logged data. For example, if the components being mated have been mated before and that information is accessible in a database, the smart mate solver may priorities these geometric entities. The smart mate solver may also incorporate a mateability predictor neural network, as described in U.S. Patent Publication 2019/0147317 A1.

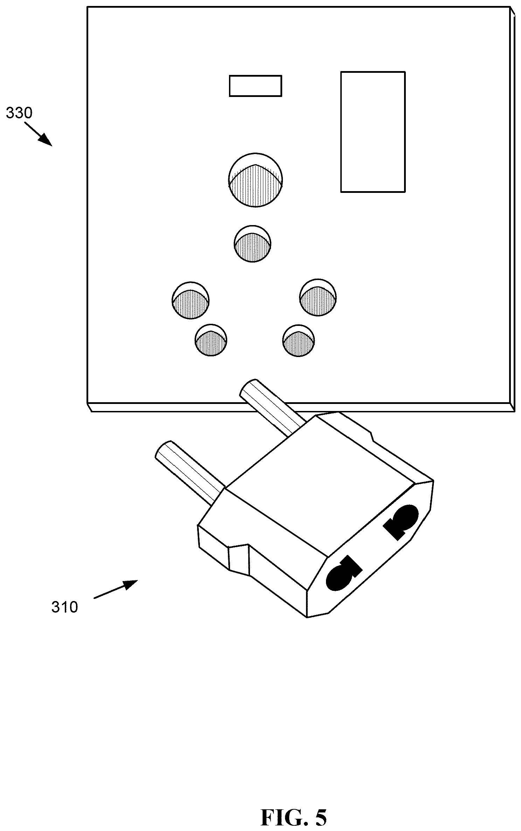

As shown by an example illustrated in FIG. 5, the user drags the 3D model of the power plug 310 over the model of a socket 330. Returning to FIG. 5, for this example, the smart mate solver analyzes faces F1, F2, P1, P2 of the power plug, and the faces F0, H1, H2, H3, H4 of the socket. While there are other faces in the models, this example omits them here for the sake of brevity.

Table 1 shows a list of all mateable pairs considered by the smart mate solver:

**Table 1: Initial list of mateable pairs**

| Index | Pair |
|---|---|
| i | (F1, F0) |
| ii | (F2, F0) |
| iii | (P1, H1) |
| iv | (P1, H2) |
| v | (P1, H3) |
| vi | (P1, H4) |
| vii | (P2, H1) |
| viii | (P2, H2) |
| ix | (P2, H3) |
| x | (P2, H4) |

The smart mate solver then checks each of the pairs in Table 1 to determine groups of all mateable pair, shown by Table 2:

**Table 2: Initial list of mateable pair groups**

| Group index | Group of mateable pairs |
|---|---|
| 1 | (F1, F0), (P1, H1), (P2, H2) |
| 2 | (F2, F0), (P1, H1), (P2, H2) |
| 3 | (F1, F0), (P1, H2), (P2, H1) |
| 4 | (F2, F0), (P1, H2), (P2, H1) |
| 5 | (F1, F0), (P1, H3) |
| 6 | (F2, F0), (P1, H3) |
| 7 | (F1, F0), (P1, H4) |
| 8 | (F2, F0), (P1, H4) |
| 9 | (F1, F0), (P2, H3) |
| 10 | (F2, F0), (P2, H3) |
| 11 | (F1, F0), (P2, H4) |
| 12 | (F2, F0), (P2, H4) |

The smart mate solver then computes the amount of rotation and translation from the displayed positions of the power plug 310 with respect to the socket 330 needed to create a pairing. The smart mate solver filters out any groups that need too much rotation, as shown by Table 3. For example, the smart mate solver may filter out groups where the rotation exceeds a threshold angle, for example, 30 degrees. The threshold angle may be predetermined or user-specified.

**Table 3: Filtered list of mateable pair groups**

| Group index | Group of mateable pairs |
|---|---|
| 1 | (F1, F0), (P1, H1), (P2, H2) |
| 2 | |
| 3 | |
| 4 | |
| 5 | (F1, F0), (P1, H3) |
| 6 | |
| 7 | (F1, F0), (P1, H4) |
| 8 | |
| 9 | (F1, F0), (P2, H3) |
| 10 | |
| 11 | (F1, F0), (P2, H4) |
| 12 | |

The smart mate solver then sorts the groups of mateable pairs in order of least translation to most translation, as shown by Table 4.

**Table 4: Sorted list of mateable pair groups**

| Sorted Group Index | Group |
|---|---|
| 1 | (F1, F0), (P1, H1), (P2, H2) |
| 2 | (F1, F0), (P1, H3) |
| 3 | (F1, F0), (P2, H4) |
| 4 | (F1, F0), (P1, H4) |
| 5 | (F1, F0), (P2, H3) |

Table. 5 show a pseudocode example of a process executed by the smart mate solver to find compatible pairs, where 'Set' is an unordered set of mateable pairs. The function GetAllCompatiblePairs (G) returns the set of mateable pairs not in G but compatible with every pair in G. If the given set G is empty, then the function will return all mateable pairs because no pair is incompatible with an empty set. The main function returns a list of sets of compatible pairs.

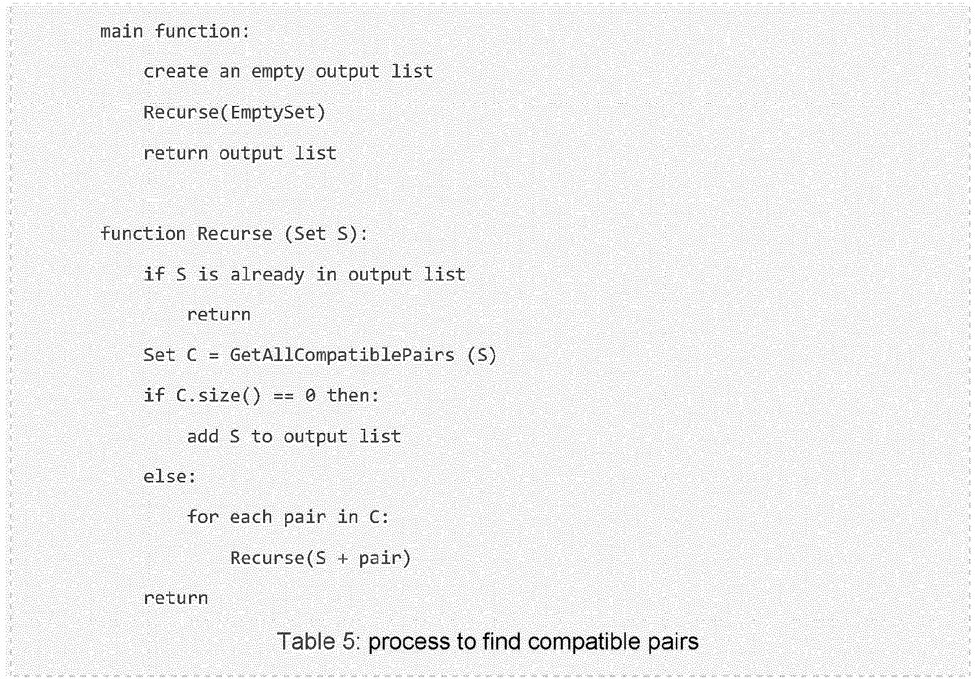

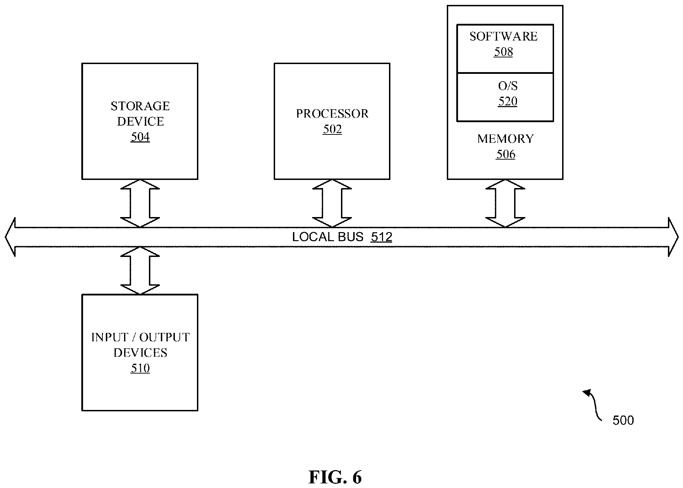

The present system for executing the functionality described in detail above may be a computer, an example of which is shown in the schematic diagram of FIG. 6. The system 500 contains a processor 502, a storage device 504, a memory 506 having software 508 stored therein that defines the abovementioned functionality, input, and output (I/O) devices 510 (or peripherals), and a local bus, or local interface 512 allowing for communication within the system 500. The local interface 512 can be, for example but not limited to, one or more buses or other wired or wireless connections, as is known in the art. The local interface 512 may have additional elements, which are omitted for simplicity, such as controllers, buffers (caches), drivers, repeaters, and receivers, to enable communications. Further, the local interface 512 may include address, control, and/or data connections to enable appropriate communications among the aforementioned components.

The processor 502 is a hardware device for executing software, particularly that stored in the memory 506. The processor 502 can be any custom made or commercially available single core or multi-core processor, a central processing unit (CPU), an auxiliary processor among several processors associated with the present system 500, a semiconductor based microprocessor (in the form of a microchip or chip set), a macroprocessor, or generally any device for executing software instructions.

The memory 506 can include any one or combination of volatile memory elements (*e.g*., random access memory (RAM, such as DRAM, SRAM, SDRAM, *etc*.)) and nonvolatile memory elements (*e.g.,* ROM, hard drive, tape, CDROM, *etc*.). Moreover, the memory 506 may incorporate electronic, magnetic, optical, and/or other types of storage media. Note that the memory 506 can have a distributed architecture, where various components are situated remotely from one another, but can be accessed by the processor 502.

The software 508 defines functionality performed by the system 500, in accordance with the present invention. The software 508 in the memory 506 may include one or more separate programs, each of which contains an ordered listing of executable instructions for implementing logical functions of the system 500, as described below. The memory 506 may contain an operating system (O/S) 520. The operating system essentially controls the execution of programs within the system 500 and provides scheduling, input-output control, file and data management, memory management, and communication control and related services.

The I/O devices 510 may include input devices, for example but not limited to, a keyboard, mouse, scanner, microphone, *etc.* Furthermore, the I/O devices 510 may also include output devices, for example but not limited to, a printer, display, *etc.* Finally, the I/O devices 510 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 500 is in operation, the processor 502 is configured to execute the software 508 stored within the memory 506, to communicate data to and from the memory 506, and to generally control operations of the system 500 pursuant to the software 508, as explained above.

When the functionality of the system 500 is in operation, the processor 502 is configured to execute the software 508 stored within the memory 506, to communicate data to and from the memory 506, and to generally control operations of the system 500 pursuant to the software 508. The operating system 520 is read by the processor 502, perhaps buffered within the processor 502, and then executed.

When the system 500 is implemented in software 508, it should be noted that instructions for implementing the system 500 can be stored on any computer-readable medium for use by or in connection with any computer-related device, system, or method. Such a computer-readable medium may, in some embodiments, correspond to either or both the memory 506 or the storage device 504. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 502 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted, or otherwise processed in a suitable manner if necessary, and then stored in a computer memory.

In an alternative embodiment, where the system 500 is implemented in hardware, the system 500 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

Under the above-described embodiments, the automatic mate definition may automatically remove several degrees of freedom with one single action without the need for a user to manually select the geometric entities that should be involved in the connection and specifying the actual connection type. The embodiments reduce the manual interaction with the software, speeding up the process of building assemblies. As a result, the process of building an assembly is more efficient and faster than a traditional approach where users have to manually specify individual relations between components.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A computer based method for mating a user selected first component of a computer aided drafting (CAD) application assembly to a second component, comprising the steps of:
detecting a first user drag of the first component;
detecting a user pause of the first drag for a predetermined interval at a pause location;
determining the second component is in a vicinity of the pause location;
identifying a plurality of first component surfaces and a plurality of second component surfaces;
comparing the plurality of first component surfaces with the plurality of second component surfaces; and
determining a suggested mating between a first component surface of said plurality of first component surfaces and a second component surface of said plurality of second component surfaces,
wherein the plurality of second component surfaces are within a predetermined proximity of the pause location.

2. The method of claim 1, further comprising the step of presenting the suggested mating to the user.

3. The method of claim 2, further comprising the step of graphically presenting the suggested mating in a context of the assembly.

4. The method of claim 3, wherein graphically representing the suggested mating further comprises the step of graphically representing the first component paired with the second component.

5. The method of claim 1, further comprising the steps of:
detecting a release by the user of the first component; and
presenting a mate confirmation user interface object.

6. The method of claim 3, further comprising the steps of:
detecting a second drag by the user of the first component; and
removing the graphical presentation of the suggested mating.

7. The method of claim 1, further comprising the step of restricting a degree of freedom of a plurality of degrees of freedom of the first component.

8. The method of 1, wherein the predetermined interval is at least 500 ms.

9. The method of 1, further comprising the step of creating a first list of mateable pairs, wherein each mateable pair comprises a surface of the first component paired with a surface of the second component.

10. The method of claim 9, further comprising the step of determining a plurality of groupings of the mateable pairs.

11. The method of claim 10, further comprising the step of filtering the plurality of groupings to produce a filtered grouping list.

12. The method of claim 11, wherein the filtering further comprises comparing a rotation of the first component with respect to the second component of a mateable pair of a grouping of the plurality of groupings to a pre-selected or user-specified rotation threshold.

13. The method of claim 11, further comprising the step of sorting the filtered grouping list in order of a translation distance between the first component and the second component of the mateable pair.

14. A computer program comprising instructions which, when the program is executed by a computer, cause the computer to carry out the method of anyone of claims 1 to 13.

15. A system comprising a processor coupled to a memory, the memory having recorded thereon the computer program of claim 14.

## Patentansprüche

1. Rechnergestütztes Verfahren zum Verbinden einer von einem Benutzer ausgewählten ersten Komponente einer Anwendungsanordnung rechnergestützten Zeichnens (CAD) mit einer zweiten Komponente, umfassend die folgenden Schritte:
Erkennen eines ersten Ziehens der ersten Komponente durch den Benutzer;
Erkennen einer Pause des ersten Ziehens durch den Benutzer über ein vorbestimmtes Intervall an einer Pausenstelle;
Bestimmen, dass die zweite Komponente in der Nähe der Pausenstelle ist;
Identifizieren einer Vielzahl von ersten Komponentenflächen und einer Vielzahl von zweiten Komponentenflächen;
Vergleichen der Vielzahl von ersten Komponentenflächen mit der Vielzahl von zweiten Komponentenflächen; und
Bestimmen einer vorgeschlagenen Verbindung zwischen einer ersten Komponentenfläche der Vielzahl von ersten Komponentenflächen und einer zweiten Komponentenfläche der Vielzahl von zweiten Komponentenflächen,
wobei die Vielzahl von zweiten Komponentenflächen in einer vorbestimmten Nähe der Pausenstelle ist.

2. Verfahren nach Anspruch 1, ferner umfassend eines Präsentierens der suggerierten Verbindung an den Benutzer.

3. Verfahren nach Anspruch 2, ferner umfassend den Schritt eines grafischen Präsentierens der suggerierten Verbindung in einem Kontext der Anordnung.

4. Verfahren nach Anspruch 3, wobei ein grafisches Präsentieren der suggerierten Verbindung ferner den Schritt eines grafischen Präsentierens der ersten Komponente, die mit der zweiten Komponente verbunden ist, umfasst.

5. Verfahren nach Anspruch 1, ferner umfassend die folgenden Schritte: Erkennen eines Loslassens der ersten Komponente durch den Benutzer; und Präsentieren eines Verbindungsbestätigung-Benutzeroberflächenobjekts.

6. Verfahren nach Anspruch 3, ferner umfassend die folgenden Schritte:
Erkennen eines zweiten Ziehens der ersten Komponente durch den Benutzer; und
Entfernen der grafischen Präsentation der suggerierten Verbindung.

7. Verfahren nach Anspruch 1, ferner umfassend den Schritt eines Beschränkens eines Freiheitsgrads aus einer Vielzahl von Freiheitsgraden der ersten Komponente.

8. Verfahren nach 1, wobei das vorbestimmte Intervall mindestens 500 ms ist.

9. Verfahren nach 1, ferner umfassend den Schritt eines Erstellens einer ersten Liste von verbindbaren Paaren, wobei jedes verbindbare Paar eine Fläche der ersten Komponente umfasst, die mit einer Fläche der zweiten Komponente verbunden ist.

10. Verfahren nach Anspruch 9, ferner umfassend den Schritt eines Bestimmens einer Vielzahl von Gruppierungen der verbindbaren Paare.

11. Verfahren nach Anspruch 10, ferner umfassend den Schritt eines Filterns der Vielzahl von Gruppierungen, um eine gefilterte Gruppierungsliste zu erzeugen.

12. Verfahren nach Anspruch 11, wobei das Filtern ferner ein Vergleichen einer Drehung der ersten Komponente in Bezug auf die zweite Komponente eines verbindbaren Paars einer Gruppierung der Vielzahl von Gruppierungen mit einem vorgewählten oder benutzerspezifischen Drehschwellenwert umfasst.

13. Verfahren nach Anspruch 11, ferner umfassend den Schritt eines Sortierens der gefilterten Gruppierungsliste in der Reihenfolge eines Translationsabstands zwischen der ersten Komponente und der zweiten Komponente des verbindbaren Paars.

14. Rechnerprogramm, umfassend Anweisungen, die, wenn das Programm von einem Rechner ausgeführt wird, den Rechner veranlassen, das Verfahren nach einem der Ansprüche 1 bis 13 durchzuführen.

15. System, umfassend einen Prozessor, der mit einem Speicher gekoppelt ist, wobei auf dem Speicher das Computerprogramm nach Anspruch 14 aufgezeichnet ist.

## Revendications

1. Procédé informatisé pour accoupler un premier composant sélectionné par l'utilisateur d'un assemblage d'application de dessin assisté par ordinateur (DAO) à un deuxième composant, comprenant les étapes comprenant le fait de :
détecter un premier déplacement par glissement, effectué par l'utilisateur, du premier composant ;
détecter une pause, effectuée par l'utilisateur, du premier déplacement par glissement pendant un intervalle prédéterminé, à un emplacement de pause ;
déterminer que le deuxième composant se trouve à proximité de l'emplacement de pause ;
identifier une pluralité de premières surfaces de composant et une pluralité de deuxièmes surfaces de composant ;
comparer la pluralité de premières surfaces de composant à la pluralité de deuxièmes surfaces de composant ; et
déterminer un accouplement suggéré entre une première surface de composant parmi ladite pluralité de premières surfaces de composant et une deuxième surface de composant parmi ladite pluralité de deuxièmes surfaces de composant,
dans lequel la pluralité de deuxièmes surfaces de composant se trouvent à une proximité prédéterminée de l'emplacement de pause.

2. Procédé selon la revendication 1, comprenant en outre l'étape de présentation de l'accouplement suggéré à l'utilisateur.

3. Procédé selon la revendication 2, comprenant en outre l'étape de présentation graphique de l'accouplement suggéré dans un contexte de l'assemblage.

4. Procédé selon la revendication 3, dans lequel la représentation graphique de l'accouplement suggéré comprend en outre l'étape de représentation graphique du premier composant apparié avec le deuxième composant.

5. Procédé selon la revendication 1, comprenant en outre les étapes comprenant le fait de :
détecter un relâchement, par l'utilisateur, du premier composant ; et
présenter un objet d'interface utilisateur de confirmation de liaison d'assemblage.

6. Procédé selon la revendication 3, comprenant en outre les étapes comprenant le fait de :
détecter un deuxième déplacement par glissement, effectué par l'utilisateur, du premier composant ; et
supprimer la présentation graphique de l'accouplement suggéré.

7. Procédé selon la revendication 1, comprenant en outre l'étape de restriction d'un degré de liberté parmi une pluralité de degrés de liberté du premier composant.

8. Procédé selon la revendication 1, dans lequel l'intervalle prédéterminé est d'au moins 500 ms.

9. Procédé selon la revendication 1, comprenant en outre l'étape de création d'une première liste de paires pouvant être accouplées, dans laquelle chaque paire pouvant être accouplée comprend une surface du premier composant appariée à une surface du deuxième composant.

10. Procédé selon la revendication 9, comprenant en outre l'étape de détermination d'une pluralité de regroupements des paires pouvant être accouplées.

11. Procédé selon la revendication 10, comprenant en outre l'étape de filtrage de la pluralité de regroupements afin de produire une liste de regroupements filtrés.

12. Procédé selon la revendication 11, dans lequel le filtrage comprend en outre le fait de comparer une rotation du premier composant par rapport au deuxième composant d'une paire pouvant être accouplée d'un regroupement parmi la pluralité de regroupements à un seuil de rotation présélectionné ou spécifié par l'utilisateur.

13. Procédé selon la revendication 11, comprenant en outre l'étape de tri de la liste de regroupements filtrés par ordre de distance de translation entre le premier composant et le deuxième composant de la paire pouvant être accouplée.

14. Programme informatique comprenant des instructions qui, lorsque le programme est exécuté par un ordinateur, amènent l'ordinateur à mettre en œuvre le procédé selon l'une quelconque des revendications 1 à 13.

15. Système comprenant un processeur couplé à une mémoire, sur laquelle mémoire est enregistré le programme informatique selon la revendication 14.
